# FASCICULE DE BREVET EUROPEEN

(11) **EP 1 326 770 B1**
(45) Date de publication et mention de la délivrance du brevet: **08.03.2006**
(21) Numéro de dépôt: 01978553.4
(22) Date de dépôt: 17.10.2001
(51) Int. Cl.: B61D 47/00, B65G 69/28

(54) **BASE DE SOUTIEN EN PIVOTEMENT POUR LA STRUCTURE PORTEUSE PIVOTANTE D'UN WAGON DE TRANSPORT COMBINE RAIL/ROUTE**
STÜTZSTRUKTUR FÜR DIE SCHWENKBEWEGUNG EINER DREHBAREN TRAGSTRUKTUR EINES WAGGONS DES KOMBINIERTEN SCHIENEN-/STRASSENTRANSPORTS
PIVOTING SUPPORT BASE FOR PIVOTING STRUCTURE BEARING A COMBINED RAIL/ROAD TRANSPORT CAR

(30) Priorité: 17.10.2000 FR 0013294
(43) Date de publication de la demande: 16.07.2003
(73) Titulaire: LOHR INDUSTRIE, 67980 Hangenbieten (FR)
(72) Inventeur: LOHR, Robert, F-67980 Hangenbieten (FR)
(74) Mandataire: Metz, Paul
(86) Numéro de dépôt international: PCT/FR2001/003214
(87) Numéro de publication internationale: WO 2002/032740

(56) Documents cités:
- EP-A- 0 583 633
- DE-A- 3 703 096
- DE-U- 29 610 767
- US-A- 4 355 940

## Description

La présente invention concerne une base de soutien en pivotement pour la structure ferroviaire porteuse pivotante d'un wagon destiné au transport combiné rail/route, permettant son chargement ou son déchargement.

L'encombrement des routes et des autoroutes, notamment par les poids lourds et l'augmentation de la pollution ont provoqué le développement de la recherche de solutions alternatives.

Parmi celles-ci figure le transport combiné rail/route, également appelé transport alternatif, qui prévoit le transport par voies ferrées sur de longues distances des véhicules routiers chargés de marchandises, alors que le transport de proximité reste sous sa forme traditionnelle.

Selon cette formule, les conteneurs, caisses mobiles, remorques ou véhicules sont chargés dans des wagons puis déchargés de ceux-ci aux terminaux de gares ferroviaires.

En ce qui concerne le transport des charges routières et notamment des remorques et semi-remorques, une solution particulièrement avantageuse a été proposée. Elle consiste à charger individuellement sur un wagon ferroviaire spécifique, le véhicule complet ou seulement sa remorque ou semi-remorque, et plus généralement la charge routière, par son énergie motrice ou celle qui lui est liée avec l'aide du conducteur du véhicule auquel elle est rattachée. On évite ainsi l'utilisation de moyens de chargements extérieurs lourds et coûteux, tels que des grues, palonniers ou autres.

Dans ce but, des wagons particuliers ont été imaginés. Il s'agit de wagons comportant une structure mobile porteuse de la charge routière, susceptible de pivoter entre une position de transport selon l'axe longitudinal du wagon et une position oblique de chargement/déchargement. Cette structure porteuse est montée sur, et assemblée à, deux plates-formes d'extrémité portées chacune par un bogie ferroviaire.

Les systèmes de transport mettant en oeuvre ce type de wagons diffèrent selon que les extrémités des structures ferroviaires porteuses sont libérables ou non des plates-formes d'extrémité et en particulier libérables les deux à la fois et selon que le pivotement de la structure porteuse est réalisé à l'aide de moyens intégrés au wagon ou de moyens extérieurs équipant la voie ferrée au niveau de postes de chargement/déchargement.

Différents wagons ont ainsi été proposés dans l'art antérieur, comme par exemple ceux décrits dans le brevet allemand DE n° 3234374 au nom de TALBOT, la demande PCT n° 81 02142 au nom de BEHRENS ou la demande française n° 0007959 déposée par le demandeur. voir également DE-U-23502 141.

Ces wagons permettent des opérations de chargement et de déchargement en position oblique de la structure porteuse et rendent possible pour la charge routière l'entrée et la sortie de la structure porteuse par ses propres moyens ou ceux qui lui sont normalement associés. Un quai adapté est nécessaire à ces opérations.

En effet, lorsque la structure porteuse pivote pour se mettre en position oblique de chargement/déchargement, elle se retrouve en porte à faux au-dessus du quai. L'épaisseur de la structure porteuse étant généralement relativement faible pour laisser à la charge routière la partie maximale du gabarit ferroviaire, des moyens de support sont alors nécessaires sur le quai, afin de supporter le poids des extrémités de la structure porteuse surtout lorsque celle-ci est à l'état chargée.

De plus, afin de permettre un pivotement de la structure porteuse d'amplitude suffisante pour réaliser convenablement les opérations de chargement/déchargement, les moyens de support doivent pouvoir accompagner, voire aider le mouvement de pivotement de la structure porteuse.

De tels moyens ont été par exemple décrits dans la demande de brevet français n° 0007960 du présent demandeur. Des cavités, par exemple curvilignes, ont été ménagées en retrait dans la structure du quai bordant la voie ferrée au niveau des postes de chargement/déchargement. Ces cavités contiennent des trains de rouleaux motorisés logés à une distance convenable du bord du quai et dépassant légèrement de la surface du quai pour reprendre le fond de la structure porteuse en porte-à-faux sur le quai. Ces rouleaux porteurs et entraîneurs sont destinés à recevoir, à supporter et à continuer à faire pivoter la structure ferroviaire porteuse par son fond dès que son porte-à-faux vers le quai dépasse une certaine limite, ceci pour arriver à une bonne stabilité et sécurité des mouvements de pivotement.

Si ces moyens sont satisfaisants d'un point de vue technique, ils exigent de lourds investissements. En effet, les quais des postes de chargement/déchargement doivent être aménagés. Des cavités doivent être prévues dans leur structure et des trains de rouleaux doivent y être installés, ce qui nécessite d'importants travaux d'infrastructure.

Par ailleurs, l'emplacement des postes de chargement/déchargement est définitivement fixé et ne peut plus être modifié par la suite. De même, chaque poste présente des dimensions fixes correspondant à un modèle de structure porteuse déterminé et ne peut être utilisé pour un wagon différent comportant par exemple une structure porteuse plus longue ou plus courte.

En outre, pour effectuer le chargement ou le déchargement rapide d'un train comprenant une pluralité de wagons, le quai doit être équipé sur toute sa longueur de nombreux postes de chargement/déchargement correspondant à la position individuelle de chaque wagon, ce qui multiplie le coût de l'aménagement.

Dans le cas contraire, le train doit se déplacer entre chaque opération pour positionner successivement chacun des wagons au niveau des installations fixes du poste de chargement/déchargement. La réalisation de l'opération globale de chargement/déchargement du train demande alors un temps considérable qui n'est pas compatible avec les nécessités de rendement du transport moderne de marchandises. Cette solution n'est donc pas optimale sur le plan de l'exploitation.

Un dispositif fixe ou mobile de rampes d'accès doit également être souvent prévu afin de permettre au véhicule routier de passer du quai à la structure porteuse en général surélevée et en porte-à-faux par rapport à celui-ci.

Le but de l'invention est de permettre la réalisation de ces opérations de chargement et de déchargement en profitant de l'avantage d'une charge routière énergétiquement indépendante, c'est-à-dire pouvant être déplacée ou se déplacer par ses propres moyens ou par les moyens qui lui sont normalement liés, en évitant tous les inconvénients précédemment cités.

L'invention a également pour but d'équiper les postes de chargement/déchargement de structures légères, déplaçables et pouvant être enlevées de support et de soutien en pivotement l'extrémité de la structure ferroviaire porteuse pivotante.

Pour résoudre ce problème technique, la présente invention enseigne une base de soutien en pivotement de la structure ferroviaire porteuse pivotante d'un wagon destiné au transport combiné rail/route d'une charge routière, qui comporte des moyens de support et d'accompagnement du mouvement de pivotement de la structure porteuse et qui peut être enlevée ou déplacée de sa position initiale d'utilisation.

Ces moyens comprennent de préférence un ensemble de rouleaux porteurs et entraîneurs affleurant à la surface de la base pour recevoir, reprendre et continuer à faire pivoter la structure ferroviaire porteuse.

Avantageusement, la base de soutien en pivotement selon l'invention est simplement posée à un emplacement approprié de la surface du quai. Elle peut donc être déplacée sans aucun problème pour être positionnée au niveau d'un autre wagon, d'un autre emplacement de chargement/déchargement, pour s'adapter à une structure porteuse de modèle différent ou même pour être rangée ou enlevée pour rendre le quai compatible ou prêt pour un autre type de moyens de chargement/déchargement.

Le quai restant totalement inchangé, il n'est pas du tout condamné à une utilisation en tant que zone de chargement/déchargement. Il peut parfaitement être utilisé pour toute autre opération ferroviaire de nature différente après un enlèvement facile et rapide de la ou des bases de soutien en pivotement selon l'invention.

La constitution d'un poste de chargement/déchargement ne nécessite aucun investissement lourd et coûteux d'infrastructure au niveau du quai.

Les coûts d'acquisition, d'exploitation et de maintenance d'une base de soutien en pivotement selon l'invention sont par ailleurs particulièrement modérés.

Préférentiellement, la base de soutien en pivotement sert également de rampe d'accès à la structure ferroviaire porteuse.

Le dispositif selon l'invention satisfait simultanément aux différentes conditions et exigences relatives au chargement et au déchargement des charges routières sur ou à partir de structures ferroviaires, et ceci dans un minimum de temps et avec la plus grande commodité possible pour les opérateurs, tout en respectant les impératifs de sécurité et une rentabilité dans ce changement de mode de transport et tout en conservant la polyvalence des infrastructures du quai.

D'autres caractéristiques et avantages de l'invention apparaîtront à la lecture de la description détaillée qui va suivre, description faite en référence aux dessins annexés, dans lesquels :
- la figure 1 est une vue schématique de dessus et en perspective d'un poste de chargement/déchargement selon l'art antérieur comportant un dispositif double de pivotement de la structure ferroviaire porteuse et des quais aménagés renfermant des rouleaux porteurs motorisés ;
- la figure 2 est une vue en perspective d'ensemble d'un poste de chargement/déchargement vu de dessus, équipé de bases de soutien en pivotement selon l'invention ;
- la figure 3 est une vue en perspective similaire à celle de la figure 2 sur laquelle a été représenté schématiquement en traits brisés le contour de la structure ferroviaire porteuse en position de transport et en position de chargement/déchargement après pivotement ;
- la figure 4 est une vue d'ensemble en perspective d'un mode de réalisation de la base selon l'invention à fonction de rampe d'accès vu de dessus ;
- la figure 5 est un agrandissement d'une partie de la figure 4 montrant de façon plus précise la partie avant de la base à fonction de rampe d'accès et ses rouleaux porteurs ;
- la figure 6 est un vue schématique du poste de chargement/déchargement de la figure 2 lors du chargement d'une semi-remorque sur la structure porteuse d'un wagon ferroviaire de transport combiné rail-route ;
- la figure 7 est une vue d'ensemble en perspective d'un autre mode de réalisation de la base selon l'invention à fonction de rampe d'accès vu de dessus ;
- la figure 8 est une vue schématique en perspective d'une variante avec dispositif de manoeuvre ;
- les figures 9 et 10 sont des vues de profil de la base de soutien représentée sur la figure 8 dans les positions respectivement abaissée et relevée du dispositif de manoeuvre.

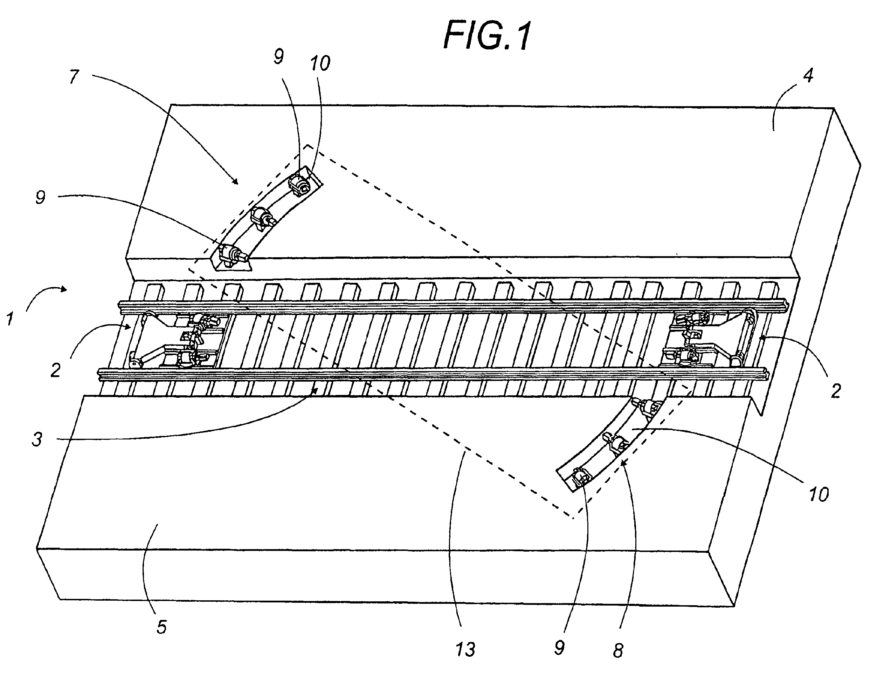

La base de soutien en pivotement selon la présente invention va maintenant être décrite de façon détaillée en référence aux figures 1 à 10. Les éléments équivalents représentés sur les différentes figures porteront les mêmes références numériques.

Un poste 1 de chargement/déchargement selon l'art antérieur divulgué dans la demande de brevet français n° 0007960 a été représenté sur la figure 1.

Selon l'exemple représenté, un dispositif combiné de levage et d'entraînement en pivotement 2 est prévu pour être installé sur une voie ferrée 3 présentant deux quais 4 et 5 de chargement/déchargement se développant de part et d'autre de la voie 3. Le dispositif 2 est monté de préférence entre les deux rails du poste 1 de chargement/déchargement représenté dans sa généralité sur la figure 1 pour lever puis pivoter une structure ferroviaire porteuse 6.

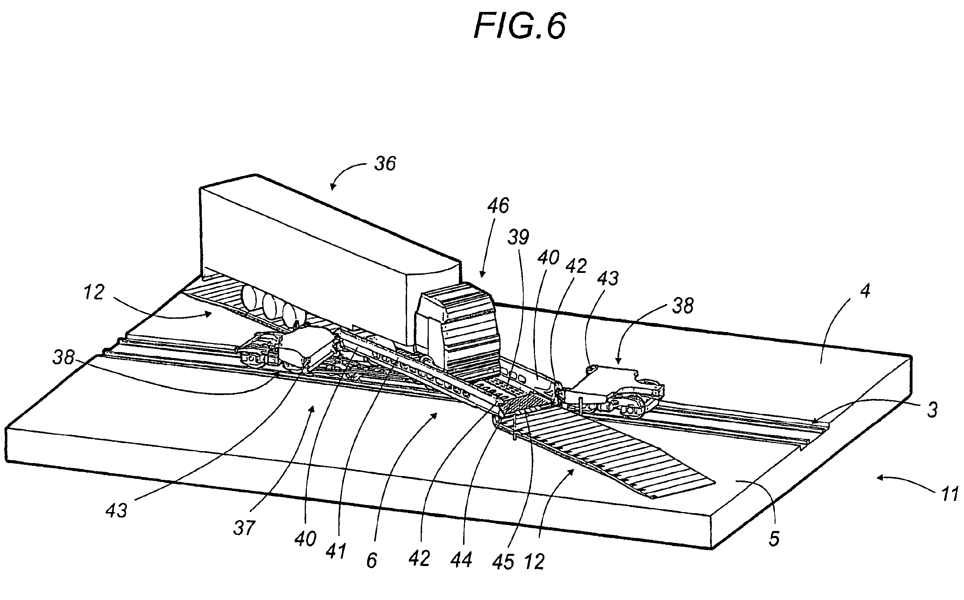

Selon le type de wagon, il peut s'avérer nécessaire de prévoir deux dispositifs de levage tels que 2, un pour chacune des extrémités de la structure ferroviaire porteuse 6 (figure 6). Dans ce cas, la structure porteuse peut être soulevée simultanément par ses deux extrémités et pivotée autour d'un centre de pivotement central non représenté. Il peut s'agir aussi d'un pivotement autour d'un centre de pivotement d'extrémité ou simplement excentré.

Ces dispositifs 2 pris comme exemple sont complétés par une série de plusieurs rouleaux porteurs et de préférence entraîneurs par exemple deux trains 7 et 8 de trois rouleaux 9 montés sur un quai respectivement 4 et 5 et destinés à recevoir, à reprendre et éventuellement mais non nécessairement, à continuer à faire pivoter la structure ferroviaire porteuse 6 par son fond dès que son porte-à-faux vers le quai dépasse une certaine limite.

Les rouleaux 9 de ces trains 7 et 8 de rouleaux sont logés dans un évidemment curviligne 10 de la structure du quai à une distance convenable du bord du quai. Ils dépassent légèrement de la surface du quai pour reprendre le fond de la structure porteuse en porte-à-faux sur le quai.

Le poste de chargement/déchargement selon l'art antérieur représenté sur la figure 1, présente les inconvénients déjà cités dans la partie introductive de la présente demande. Il ne sera pas décrit plus en détail dans cette demande.

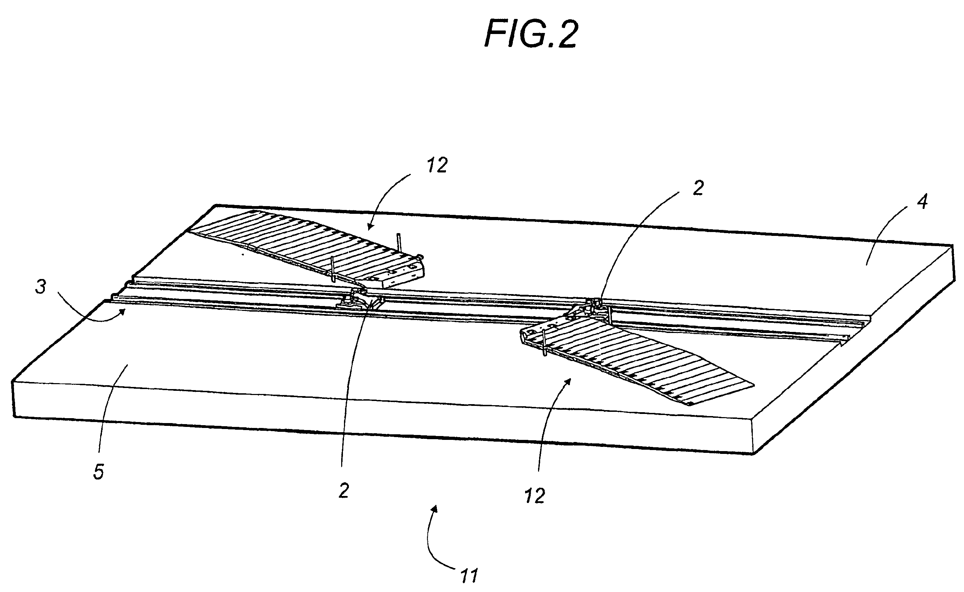

Pour faciliter la comparaison, un poste 11 de chargement/déchargement de même configuration mais équipé de bases de soutien en pivotement 12 selon l'invention a été représenté sur la figure 2.

De la même façon, les deux dispositifs combinés de levage et d'entraînement en pivotement 2 pris comme exemple sont installés sur la voie ferrée 3 s'étendant entre les deux quais 4 et 5 de chargement/déchargement.

Les quais 4 et 5 sont cette fois parfaitement classiques et ne comportent aucun évidemment ou autre particularité dans leur structure.

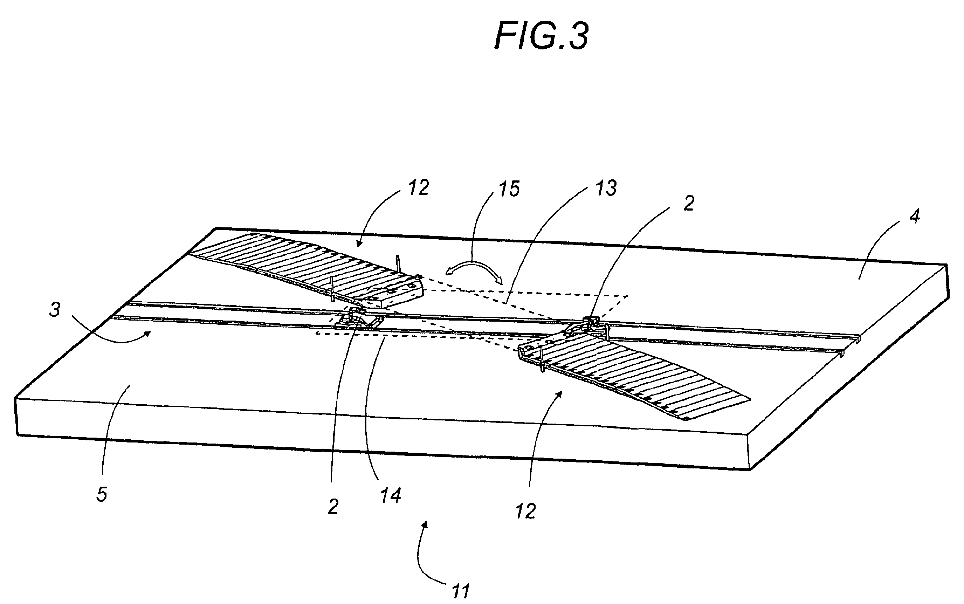

Au niveau du poste de chargement/déchargement 11 la hauteur de la voie 3 est de préférence sensiblement la même que celle des quais 4 et 5. Les deux rails sont noyés dans la structure de la voie et affleurent à la hauteur de la surface des quais 4 et 5. Cet aménagement de la voie ferrée 3, représenté sur la figure 3 uniquement, permet avantageusement à la charge routière de traverser la voie 3 très facilement et sans infrastructure ou équipement particulier afin de passer d'un quai à l'autre.

Selon l'exemple représenté, la base de soutien en pivotement 12 est réalisée sous la forme d'une rampe d'accès composite.

Une base de soutien en pivotement 12 sous forme de rampe d'accès est placée sur la surface de chacun des quais 4 et 5. Ces rampes d'accès 12 sont de préférence simplement posées sur la surface des quais goudronnés ou bétonnés. Elles sont ainsi facilement et rapidement déplaçables et peuvent être enlevées tout aussi facilement et rapidement.

Les bases de soutien 12 sous la forme de rampes d'accès peuvent néanmoins comporter un quelconque moyen d'immobilisation, de fixation ou de solidarisation au quai, temporaire ou permanent, sans sortir du cadre de l'invention.

Les bases 12 sous la forme de rampes d'accès sont placées dans le prolongement de la structure porteuse ferroviaire 6 lorsque celle-ci est en position oblique de chargement/déchargement schématisée par un contour 13 en traits brisés sur les figures 1 et 3.

Sur la figure 3, la position longitudinale de transport de la structure porteuse ferroviaire 6 a également été représentée schématiquement par un contour 14 en traits brisés. La structure porteuse 6 peut passer de l'une à l'autre de ces positions par un pivotement symbolisé par la double flèche 15.

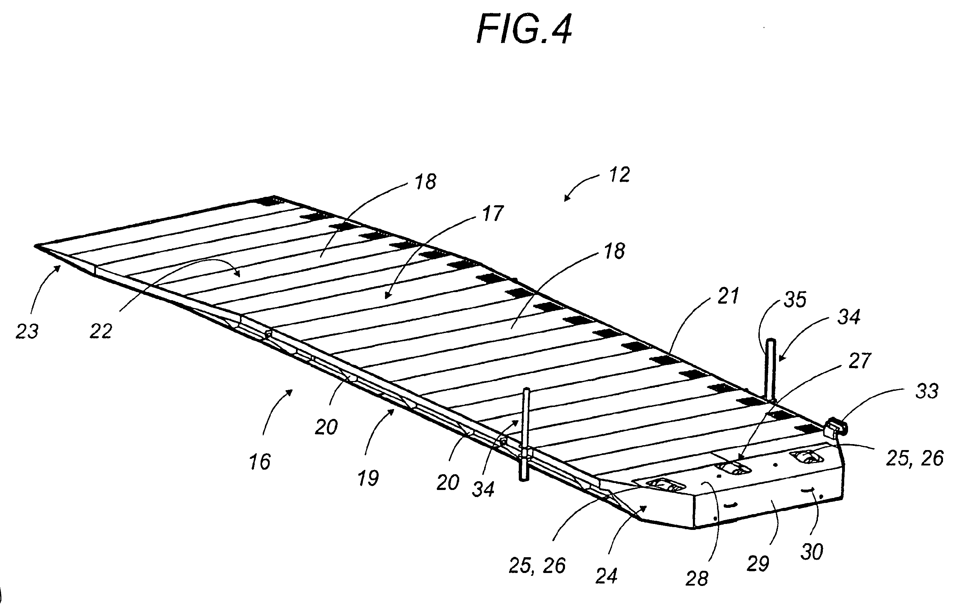

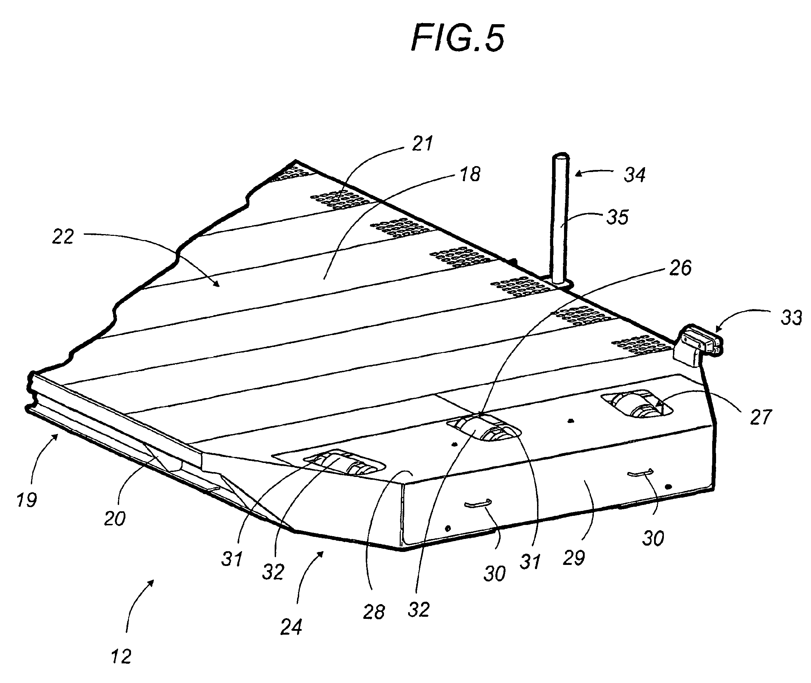

Pour des raisons de simplification car les deux bases de soutien en pivotement sont de préférence identiques, il ne sera décrit ci-après qu'une seule de ces bases qui sera mieux comprise à l'observation des figures 4 et 5.

Dans le cas de la variante représentée sur les figures 2 à 7, chaque base 12 est réalisée sous la forme d'une rampe d'accès. Néanmoins, il doit être clair qu'il ne s'agit que d'un mode de réalisation préférentiel de la base de soutien en pivotement selon l'invention, celle-ci pouvant évidemment adopter d'autres formes.

On peut imaginer, par exemple, une base de soutien en pivotement selon l'invention sous la forme d'un bloc de taille plus modeste, avantageusement déplaçable sur le quai et servant uniquement au support et à l'accompagnement du pivotement de la structure ferroviaire porteuse. En cas de nécessité, la fonction de rampe d'accès peut alors être réalisée par un dispositif annexe indépendant ou par un dispositif intégré à la structure ferroviaire porteuse par exemple sous la forme d'un platelage dépliable lorsque celle-ci se trouve en position oblique de chargement/déchargement.

Le descriptif ci-dessous sera consacré à la variante préférentielle représentée sur les figures 2 à 6 de la base de soutien en pivotement selon l'invention, c'est-à-dire à une base servant en outre de rampe d'accès à la structure ferroviaire porteuse 6.

La base de soutien en pivotement 12 présente un corps 16 allongé en forme générale de dièdre à angle d'ouverture faible afin de former une rampe inclinée à pente progressive, constante ou discontinue.

Le corps 16 de la base à fonction de rampe présente une face supérieure 17 constituée de préférence par une pluralité de traverses 18 sensiblement rectangulaires, mécano-soudées transversalement sur un châssis léger 19 à piliers 20 de rappel mécanique.

La paroi supérieure 17 peut présenter en outre une ou plusieurs séries de perforations 21 de préférence situées à l'extrémité de certaines traverses 18.

La face supérieure 17 de la base à fonction de rampe 12 selon l'exemple représenté forme ainsi un platelage 22 incliné, longitudinal et sensiblement rectangulaire sur lequel un véhicule routier est capable de rouler.

La base réalisée sous la forme d'une rampe d'accès 12 comporte, au niveau de son extrémité arrière de plus faible hauteur, un becquet d'accès 23 en forme de coin permettant une jonction progressive entre le quai et le platelage 22 qui facilite pour les véhicules routiers le passage du quai à la rampe d'accès.

L'extrémité avant située côté rail de la base en rampe forme un bloc d'extrémité avant de préférence conformée en caisson 24, renfermant des moyens 25 de support de l'extrémité de la structure ferroviaire porteuse 6 et d'accompagnement de son pivotement.

Ce bloc d'extrémité avant peut par exemple être séparable du reste du corps 16 de la base à fonction de rampe d'accès et constituer à lui seul la base de soutien en pivotement selon l'invention. Un moyen de rampe d'accès de nature différente, par exemple de par sa longueur, son inclinaison ou sa résistance, peut aussi lui être éventuellement ajouté.

Les moyens 25 de support et d'accompagnement du pivotement de la structure ferroviaire porteuse 6 sont préférentiellement des rouleaux porteurs 26 affleurant à la surface de la base 12 et dépassant légèrement du platelage 22 au niveau d'ouvertures 27 ménagées dans la paroi supérieure 28 du caisson 24.

Pour faciliter la maintenance des rouleaux porteurs 26, le caisson 24 est de préférence accessible par exemple au niveau de sa paroi transversale avant 29. Des moyens facilitant l'ouverture de ce caisson 24, tels que des poignées de préhension 30, peuvent en outre être prévus.

Ces rouleaux porteurs 26 sont des ensembles formés chacun d'un cylindre tournant 31 de forme légèrement tronconique pour bénéficier des différences de vitesses circonférencielles d'une extrémité à l'autre en vue d'éviter les glissements. La surface latérale de ces rouleaux est préférentiellement recouverte d'une bande métallique de roulement 32 arrivant en contact avec la sous-face de la structure ferroviaire porteuse 6, de préférence au niveau d'une zone prévue pour l'appui et le roulement (non représentée) .

Les rouleaux porteurs 26 sont de préférence motorisés afin d'entraîner la structure porteuse 6 par leur propre roulement, de façon à reprendre et à continuer à faire pivoter la structure ferroviaire porteuse. A cette fin, au moins l'un d'entre eux comporte par exemple un bloc-moteur électrique d'entraînement du rouleau en rotation situé dans l'axe longitudinal du rouleau à l'intérieur du caisson 24.

Avantageusement, un système de commande combiné peut contrôler à la fois les rouleaux porteurs 26 de la base de soutien en pivotement 12 et le dispositif correspondant de levage et d'entraînement en pivotement 2, leur fonctionnement respectif étant alors parfaitement synchronisé.

La base en rampe d'accès 12 comporte une butée d'ouverture 33 s'élevant sensiblement verticalement de l'extrémité avant du platelage 22, contre laquelle la structure porteuse ferroviaire 6 vient buter en fin de course. La butée d'ouverture 33 peut comporter en outre un moyen d'immobilisation et de maintien de la structure porteuse dans cette position au cours des opérations de chargement/déchargement.

Cette butée d'ouverture constitue l'un des moyens qui coopèrent avec une butée de fermeture existant sur le mécanisme de levage en vue de la commande en fonctionnement d'une phase de chargement ou de déchargement.

Par ailleurs, la base en rampe d'accès 12 est équipée préférentiellement d'un ou plusieurs moyens de repérage 34 se présentant par exemple sous la forme d'une tige 35 montée déplaçable ou non sur l'un des bords latéraux de la base en rampe d'accès 12 et s'élevant sensiblement verticalement au-dessus du platelage 22. Ces moyens de repérage 34 facilitent les manoeuvres du chauffeur du véhicule routier lors des opérations de chargement/déchargement de la charge routière en lui permettant de repérer facilement l'endroit où il doit s'arrêter en vue de positionner la remorque avant son chargement.

Ces moyens de repérage 34 sont de préférence déplaçables ou positionnables par exemple le long des bords latéraux de la base en rampe d'accès afin de s'adapter aux différentes longueurs que peuvent présenter les charges et véhicules routiers.

Du fait de sa constitution légère telle que décrite précédemment, la base de soutien en pivotement 12 selon l'invention est facilement et rapidement déplaçable.

On décrira maintenant les phases de chargement et de déchargement en se référant à la figure 6 qui illustre l'opération de chargement d'une semi-remorque 36 sur un wagon 37 destiné au transport combiné rail/route d'une charge routière, au niveau d'un poste de chargement/déchargement 11 équipé de deux bases de soutien 12 selon l'invention à fonction supplémentaire de rampe d'accès. Seul un unique wagon a été représenté, mais il peut évidemment être accouplé à d'autres wagons et appartenir à un train complet.

Le wagon 37 se compose de deux plates-formes d'extrémité 38 et d'une structure ferroviaire porteuse 6 d'une charge routière montée pivotante sur ce wagon et reliée aux plates-formes d'extrémité par des liaisons dissociables et verrouillables d'assemblage rigide.

La structure ferroviaire porteuse 6 est un corps en réceptacle formé d'un plancher 39 en particulier de faible épaisseur et à fond plat. La structure ferroviaire porteuse 6 comporte en plus deux parois latérales de protection 40, délimitées vers le haut par des longerons supérieurs ou des rives 41 se prolongeant au-delà du corps pour se terminer par des extrémités 42 conformées techniquement de façon à venir porter sur et se bloquer dans des conformations complémentaires réceptrices 43 de la plate-forme d'extrémité 38 correspondante en vue de constituer à l'état assemblé une liaison dissociable d'assemblage rigide. Le wagon 37 à l'état fermé forme ainsi un ensemble mécanique solide et rigide, identique à un wagon d'une seule pièce.

Dans la version représentée sur la figure 6, la structure ferroviaire porteuse 6 présente également à chacune de ses extrémités un platelage transversal 44 prolongé par un becquet d'accès 45 venant porter sur l'extrémité avant de la base de soutien en forme de rampe d'accès 12 selon l'invention lorsque la structure porteuse 6 est en position oblique de chargement/déchargement.

Dans cette version la rampe d'accès peut être relevable entre une position abaissée et une position haute d'accès des véhicules à transporter à un niveau supérieur ou deuxième étage de chargement.

Le fonctionnement comporte les phases générales suivantes par exemple pour une opération de chargement.

Le wagon 37 est immobilisé avec une certaine tolérance à l'emplacement du poste 11 de chargement/déchargement.

On procède à la mise en oeuvre des dispositifs de levage et d'entraînement en pivotement 2 qui entrent en contact avec la zone prévue pour l'appui et le roulement de la structure ferroviaire porteuse 6. Suivent alors, après le déverrouillage des liaisons d'assemblage dissociables entre la structure ferroviaire porteuse 6 et les plates-formes d'extrémité 38, les mouvements de levage coordonné des deux extrémités de la structure ferroviaire porteuse, puis de pivotement de ces extrémités.

Les coins des extrémités de la structure ferroviaire porteuse 6 sont alors repris par les moyens de support-roulage 25 des bases 12 de soutien en pivotement positionnées sur les quais 4 et 5.

Le pivotement de la structure porteuse 6 se poursuit grâce à un entraînement par la mise en rotation des rouleaux 26 et s'effectue jusqu'à un dégagement suffisant des extrémités de la structure ferroviaire porteuse 6 de chaque plate-forme d'extrémité 38 et un positionnement oblique d'angle suffisant pour procurer une certaine aisance dans les manoeuvres de chargement/déchargement.

Les extrémités de la structure porteuse 6 portent alors chacune sur l'extrémité avant d'une base de soutien en rampe d'accès 12 et se trouvent en butée d'appui latéral contre la structure de butée d'ouverture 33 de la base.

Le chargement peut alors avoir lieu. La charge routière accède à la structure ferroviaire porteuse 6 par ses propres moyens, par exemple pour la semi-remorque 36 au moyen du tracteur 46 qui la déplace.

Le véhicule routier s'engage sur la première rampe d'accès 12 servant de base de soutien en pivotement, puis sur le plancher 39 de la structure ferroviaire porteuse 6 et débute sa descente de l'autre côté du wagon 37 à l'aide de la deuxième rampe d'accès 12. La progression du véhicule routier se fait sans difficulté grâce à la succession continue des différents becquets d'accès et platelages.

Le chauffeur immobilise le véhicule tracteur lorsque celui-ci arrive au niveau des moyens de repérage 34. La charge routière 36 est alors correctement positionnée et repose par ses roues et ses béquilles sur la structure ferroviaire porteuse 6. Elle est désaccouplée de son véhicule tracteur 46 qui poursuit ensuite sa descente jusqu'au quai 5 au moyen de la deuxième base 12 et quitte le quai de l'autre côté.

La structure porteuse ferroviaire 6 pivote alors en sens contraire pour se remettre en position longitudinale de transport. Les mouvements de fermeture du wagon s'effectuent dans le sens inverse.

Le poste de chargement/déchargement 11 décrit et représenté sur les différentes figures comporte deux bases de soutien en pivotement 12 selon l'invention. Cependant, il peut également n'en comporter qu'une si une seule extrémité de la structure ferroviaire porteuse 6 est libérable. Ceci est également le cas lorsqu'un seul quai borde la voie ferrée ou lorsque la structure ferroviaire porteuse est fermée par construction sur un de ses côtés. Dans tous ces cas la semi-remorque est positionnée en marche arrière du véhicule.

De même, la base de soutien en pivotement selon l'invention peut être utilisée avec toute sorte de wagons ferroviaires 37 à structure porteuse pivotante et ses applications ne sont en aucun cas limitées au modèle de wagon décrit dans la présente demande.

Elle peut par exemple être utilisée indifféremment avec un wagon à structure porteuse présentant un centre de pivotement au centre, en extrémité ou en un endroit décentré quelconque du wagon et avec un ou plusieurs dispositifs de levage et d'entraînement en pivotement de la structure ferroviaire porteuse, qu'ils soient portés par le wagon ou situés sur la voie ferrée.

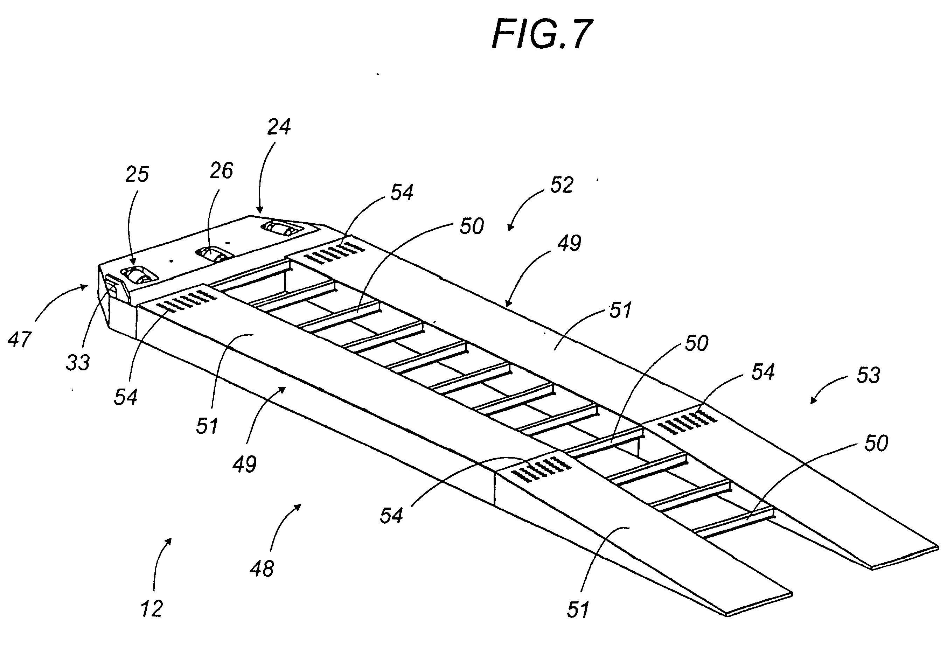

Un autre mode de réalisation de la base de soutien en pivotement 12 selon l'invention a été représenté sur la figure 7.

Il s'agit également d'une base de soutien en pivotement à fonction de rampe d'accès mais dont la structure a été allégée par rapport au mode de réalisation précédent.

Elle comprend comme précédemment un bloc d'extrémité avant 47 à placer côté rail, conformé en caisson 24 et renfermant des moyens 25 de support de l'extrémité de la structure ferroviaire porteuse 6 et d'accompagnement de son pivotement, constitués préférentiellement de rouleaux porteurs 26 dépassant légèrement de la surface du caisson 24.

Pour faciliter la maintenance des rouleaux porteurs 26, le caisson 24 est de préférence accessible.

La base de soutien en pivotement 12 comporte également un corps allongé 48 à fonction de rampe d'accès. Il comprend deux longerons-caissons 49 latéraux, aboutissant au bloc d'extrémité avant 47 de la base et de préférence reliés entre eux par une pluralité de traverses de rigidification 50 sensiblement perpendiculaires à ceux-ci.

La paroi supérieure 51 des longerons latéraux 49 présente une largeur et une résistance suffisantes pour pouvoir servir de piste de roulement pour les roues de la charge routière devant être chargée sur ou déchargée de la structure porteuse ferroviaire 6. L'écartement relatif des deux longerons 49 est prévu en conséquence.

Le corps 48 à fonction de rampe d'accès du mode de réalisation représenté est constitué de deux parties : une partie intermédiaire 52 et une partie d'extrémité 53.

Dans cette version la rampe d'accès est également relevable entre une position abaissée et une position haute.

La paroi supérieure 51 des longerons 49 dans la partie d'extrémité 53 est inclinée de façon à permettre une jonction progressive entre le quai et la base de soutien en pivotement selon l'invention.

Dans la partie intermédiaire 52, reliant la partie d'extrémité 53 du corps 48 au bloc d'extrémité avant 47 de la base, les longerons 49 sont sensiblement parallélépipédiques avec une paroi supérieure 51 sensiblement horizontale.

La paroi supérieure 51 de la base de soutien en pivotement peut présenter en outre une ou plusieurs séries de perforations 54.

Comme précédemment, le bloc d'extrémité avant 47 de la base de soutien en pivotement 12 est de préférence séparable du corps 48 formant la rampe d'accès. Il peut constituer à lui seul la base de soutien en pivotement selon l'invention ou ne former qu'une partie de celle-ci, un moyen à fonction de rampe d'accès identique ou différent de ceux décrits ci-dessus, et/ou un ou plusieurs moyens à fonction d'une autre nature pouvant par exemple lui être ajouté(s) selon les besoins.

La partie intermédiaire 52 et la partie d'extrémité 53 du corps 48 à fonction de rampe d'accès peuvent également être séparables l'une de l'autre. Préférentiellement, la partie d'extrémité 53 à paroi supérieure 51 inclinée peut alors être directement solidarisée au bloc d'extrémité avant 47 de la base selon l'invention afin de former une rampe d'accès plus courte.

Ce mode de réalisation de base de soutien en pivotement 12 selon l'invention peut évidemment comporter en outre une butée d'ouverture 33 ou un quelconque moyen de repérage de préférence déplaçable.

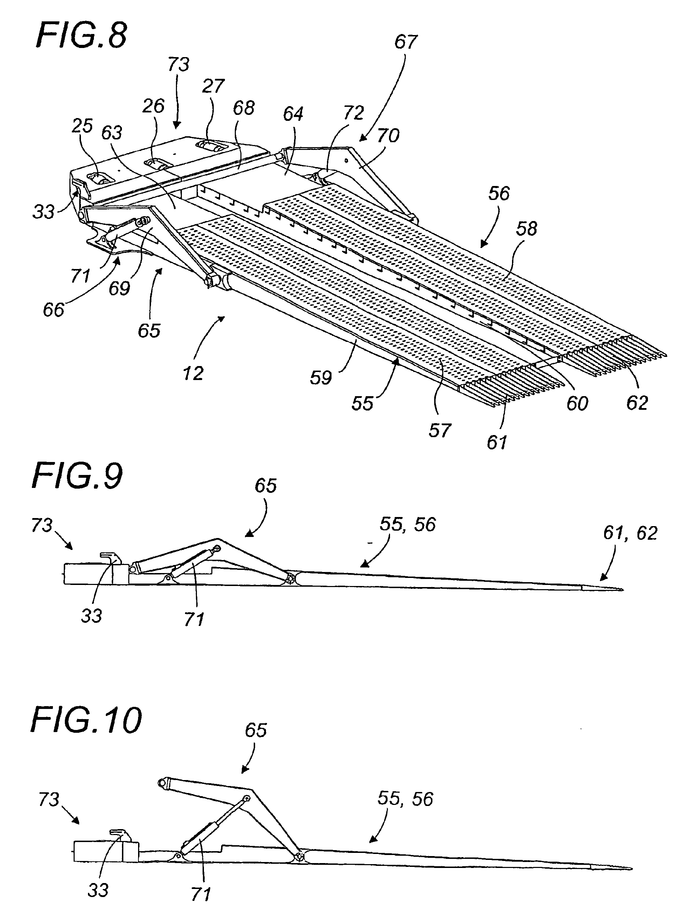

Un autre mode de réalisation correspond à la variante de la base de soutien en pivotement 12 représentée sur les figures 8 à 10. Elle procède de la même idée générale inventive que les précédentes et s'adapte de la même façon au poste de chargement/déchargement décrit mais aussi à un poste quelconque de chargement/déchargement parmi ceux utilisant la mise en oblique du wagon.

La base de soutien en pivotement 12 selon cette variante est réalisée par exemple sous la forme de deux pistes 55 et 56 de roulage disposées côte à côte, comportant chacune un platelage 57 et 58 fixés respectivement sur un support mécanique en rampe 59 et 60 et terminées chacune par un bec d'attaque 61 et 62 assurant la liaison de transition entre l'extrémité des pistes et le sol.

Les pistes se terminent chacune du côté opposé par une zone d'appui 63 et 64 en retrait vers le bas pour la réception d'une nacelle porteuse (non représentée) équipant la structure porteuse 6 utilisée et ceci pour soutenir la cheville ouvrière d'une semi-remorque ou un essieu d'un tracteur routier ou une partie d'une autre charge routière.

Cette variante se distingue également des autres car elle se trouve équipée d'un dispositif basculant de manoeuvre 65 formé de deux bras de manoeuvre 66 et 67 jumelés par un tube transversal de synchronisme 68. Chaque bras est constitué de deux parties jointives selon un coude 69 ou 70. Chaque bras est articulé à pivotement sur le chant extérieur de la piste de roulage correspondante et se trouve actionné en mouvements de relevage et d'abaissement par un vérin 71 et 72 monté chacun articulé d'une part sur une semelle extérieure et d'autre part au bras de manoeuvre correspondant par exemple au niveau de son coude 69 ou 70.

Les autres moyens et la conformation avant de la base de soutien déplaçable selon cette variante restent identiques ou analogues à ceux des variantes précédentes y compris la butée d'ouverture 33 s'élevant sensiblement verticalement de l'extrémité avant de la base de soutien. Cette extrémité avant est constituée d'un caisson de protection 73 abritant les rouleaux porteurs 25, 26 et 27 dont un au moins, par exemple le rouleau central 26, est motorisé.

Il existe également la possibilité de monter au moins un moyen de repérage 34, déplaçable ou positionnable, facilitant les manoeuvres du véhicule routier conduit par le chauffeur routier lors des opérations de chargement/déchargement.

De même que pour les autres variantes, du fait de sa constitution légère, la base de soutien en pivotement décrite ci-dessus et représentée sur la figure 8 est facilement et rapidement déplaçable.

Il faut préciser que cette rampe peut être relevable en hauteur pour le chargement à un niveau supérieur. Ce relevage en hauteur peut provenir de l'inclinaison des platelages sous l'effet de vérins ou autres moyens de levage et d'abaissement non représentés.

Un avantage particulier de cette variante concerne la possibilité de se dispenser de moyens de repérage et de positionnement. En effet, la nacelle peut servir à elle seule de moyen de repérage et de positionnement. Lorsque celle-ci arrive en contact au bon endroit avec la charge routière, elle constitue un repère de positionnement suffisant pour le chauffeur routier opérant les manoeuvres d'engagement ou de dégagement de la charge routière.

Le dispositif de manoeuvre 65 monté sur cette base de soutien 12 sert au soutien et à la pose et dépose d'une nacelle destinée à supporter et à soutenir la cheville ouvrière d'une semi-remorque ou un essieu d'un tracteur routier ou une partie d'une autre charge routière pendant le transport dans le wagon et pendant les phases de chargement/déchargement. Cette nacelle vient se monter à l'avant des bras de la structure ferroviaire porteuse pour apporter la garantie de l'immobilisation de la charge routière pendant le transport.

## Revendications

1. Base pour le soutien en pivotement d'une structure ferroviaire porteuse pivotante (6) d'un wagon destiné au transport combiné rail/route d'une charge routière **caractérisée en ce qu'**elle comporte des moyens (25) de support et d'accompagnement du mouvement de pivotement de la structure ferroviaire porteuse (6) et au moins une rampe constituant une piste de roulage pour un véhicule routier ou une charge routière.

2. Base selon la revendication 1 **caractérisée en ce qu'**elle peut être enlevée ou déplacée de sa position initiale d'utilisation.

3. Base selon la revendication précédente **caractérisée en ce qu'**elle est posée à un emplacement approprié de la surface du quai (4, 5).

4. Base selon l'une quelconque des revendications précédentes **caractérisée en ce que** les moyens (25) de support et d'accompagnement du pivotement de la structure ferroviaire porteuse (6) comprennent au moins un rouleau porteur (26) affleurant à la surface de la base (12) pour recevoir la structure ferroviaire porteuse.

5. Base selon la revendication précédente **caractérisée en ce qu'**au moins un rouleau porteur (26) est motorisé afin de pouvoir reprendre et continuer à faire pivoter la structure ferroviaire porteuse (6).

6. Base selon l'une quelconque des revendications 4 ou 5 **caractérisée en ce qu'**au moins un rouleau porteur (26) est formé d'un cylindre tournant (31) légèrement tronconique dont la surface latérale est recouverte d'une bande métallique de roulement (32).

7. Base selon l'une quelconque des revendications précédentes **caractérisée en ce que** les moyens (25) de support et d'accompagnement du pivotement de la structure ferroviaire porteuse (6) sont logés dans un bloc d'extrémité avant (24, 47) situé côté rail.

8. Base selon l'une quelconque des revendications précédentes **caractérisée en ce que** les moyens (25) de support et d'accompagnement du pivotement de la structure ferroviaire porteuse (6) sont logés dans un caisson (24) ou (73) accessible.

9. Base selon l'une quelconque des revendications précédentes **caractérisée en ce qu'**elle sert également de rampe d'accès à la structure ferroviaire porteuse (6).

10. Base selon la revendication 7 et 9 **caractérisée en ce que** le bloc d'extrémité avant (24, 47) de la base de soutien en pivotement (12) est séparable de la partie (16, 48) à fonction de rampe d'accès.

11. Base selon l'une quelconque des revendications précédentes **caractérisée en ce que** la au moins une rampe est relevable entre une position abaissée et une position haute.

12. Base selon la revendication 9 **caractérisée en ce qu'**elle présente un corps (16) allongé en forme générale de dièdre à angle d'ouverture faible afin de former une rampe inclinée à pente progressive constante ou discontinue.

13. Base selon l'une quelconque des revendications précédentes **caractérisée en ce que** sa face supérieure (17) comporte une pluralité de traverses (18) sensiblement rectangulaires, mécano-soudées transversalement sur un châssis léger (19) à piliers (20) de rappel mécanique.

14. Base selon l'une quelconque des revendications précédentes **caractérisée en ce qu'**elle comporte un becquet d'accès (23) en forme de coin au niveau de son extrémité de plus faible hauteur.

15. Base selon l'une quelconque des revendications 7 à 10 **caractérisée en ce qu'**elle comporte deux longerons-caissons (49) latéraux aboutissant au bloc d'extrémité avant (47), reliés entre eux par une pluralité de traverses de rigidification (50).

16. Base selon l'une quelconque des revendications précédentes **caractérisée en ce que** sa paroi supérieure (17, 51) présente au moins une série de perforations (21, 54).

17. Base selon l'une quelconque des revendications précédentes de 1 à 10 **caractérisée en ce qu'**elle se compose de deux pistes de roulement (55) et (56) recouvertes chacune d'un platelage (57) et (58) fixé chacun sur un support incliné en forme de rampe (59) et (60), pistes terminées chacune vers son extrémité libre par un bec d'attaque (61) et (62).

18. Base selon l'une quelconque des revendications précédentes de 1 à 10 et 17 **caractérisée en ce que** l'extrémité avant de chacune des pistes de roulement se termine par une zone d'appui (63) et (64) pour la réception d'une nacelle porteuse et d'immobilisation.

19. Base selon l'une quelconque des revendications précédentes de 1 à 10 et 17 et 18 **caractérisée en ce qu'**elle comporte un dispositif basculant de manoeuvre (65) formé de deux bras pivotants (66) et (67) jumelés par un tube de synchronisme (68), ces bras étant coudés et montés pivotants sur les chants extérieurs des pistes de roulement (55) et (56) et actionnés par des vérins de levage et d'abaissement (71) et (72) montés chacun entre une semelle et le bras de manoeuvre correspondant.

20. Base selon l'une quelconque des revendications précédentes **caractérisée en ce qu'**elle comporte une butée d'ouverture (33) contre laquelle la structure ferroviaire porteuse (6) vient buter en fin de course.

21. Base selon l'une quelconque des revendications précédentes **caractérisée en ce qu'**elle comporte au moins un moyen de repérage (34).

22. Base selon la revendication précédente **caractérisée en ce que** le moyen de repérage (34) est déplaçable ou positionnable.

23. Base selon l'une quelconque des revendications précédentes **caractérisée en ce que** la ou les rampes avec les structures de roulage sont relevables par inclinaison.

## Patentansprüche

1. Stützbasis für die Schwenkbewegung einer schwenkbaren Eisenbahn-Tragstruktur (6) eines Waggons für den kombinierten Schienen-/Straßentransport einer Straßenfahrzeugbeladung, **gekennzeichnet durch** Mittel (25) zum Stützen und zur Begleitung der Schwenkbewegung der Eisenbahn-Tragstruktur (6) und mindestens eine Rampe mit einer Fahrbahn für ein Straßenfahrzeug oder eine Straßenfahrzeugbeladung.

2. Stützbasis nach Anspruch 1, **gekennzeichnet durch** aus ihrer ursprünglichen Verwendungsposition Entfern- oder Bewegbarkeit.

3. Stützbasis nach dem vorangehenden Anspruch, **dadurch gekennzeichnet, dass** sie an einer geeigneten Stelle der Oberfläche des Bahnsteigs (4, 5) angeordnet ist.

4. Stützbasis nach einem der vorangehenden Ansprüche, **dadurch gekennzeichnet, dass** die Mittel (25) zum Stützen und zur Begleitung der Schwenkbewegung der Eisenbahn-Tragstruktur (6) wenigstens eine in die Basisoberfläche (12) bündig eingelassene Tragrolle (26) zur Aufnahme der Eisenbahn-Tragstruktur umfassen.

5. Stützbasis nach vorangehendem Anspruch, **dadurch gekennzeichnet, dass** zumindest eine Tragrolle (26) motorisch angetrieben ist, um die Eisenbahn-Tragstruktur (6) aufzunehmen und deren Schwenkung fortsetzen.

6. Stützbasis nach Anspruch 4 oder 5, **dadurch gekennzeichnet, dass** wenigstens eine Tragrolle (26) als leicht kegelförmiger drehbarer Zylinder (31) ausgebildet ist, dessen laterale Oberfläche mit einem metallischen Laufband (32) beschichtet ist.

7. Stützbasis nach einem der vorangehenden Ansprüche, **dadurch gekennzeichnet, dass** die Mittel (25) zum Stützen und zum Begleiten der Schwenkbewegung der Schienentragstruktur (6) in einem Block am vorderen Ende (24, 47) gelagert sind, der auf der Seite der Schienen liegt.

8. Stützbasis nach einem der vorangehenden Ansprüche, **dadurch gekennzeichnet, dass** die Mittel (25) zum Stützen und zum Begleiten der Schwenkbewegung der Eisenbahn-Tragstruktur (6) in einem einen Zugang erlaubenden Kasten (24) oder (73) gelagert sind.

9. Stützbasis nach einem der vorangehenden Ansprüche, **gekennzeichnet durch** Ausbildung als Zugangsrampe für die Eisenbahn-Tragstruktur (6).

10. Stützbasis nach Anspruch 7 oder 9, **dadurch gekennzeichnet, dass** der Block am vorderen Ende (24, 47) der Stützbasis (12) für die Schwenkbewegung trennbar von dem die Funktion einer Zugangsrampe aufweisenden Teil angeordnet ist .

11. Stützbasis nach einem der vorangehenden Ansprüche, **dadurch gekennzeichnet, dass** die, mindestens eine Rampe zwischen einer herabgelassenen Position und einer oberen Position hochstellbar ist.

12. Stützbasis nach Anspruch 9, **gekennzeichnet durch** einen verlängerten Körper (16) der allgemeinen Form eines Dieders mit einem kleinen Öffnungswinkel, um eine Rampe mit progressiver, konstanter oder diskontinuierlicher Steigung zu bilden.

13. Stützbasis nach einem der vorangehenden Ansprüche, **dadurch gekennzeichnet, dass** ihre Oberseite (17) eine Mehrzahl von Traversen (18) umfasst, die grundsätzlich rechteckig ausgebildet sind und querliegend auf einem leichten Gestell (19) aus Stützen (2) mit mechanischer Rückstellung mechanisch verschweißt sind.

14. Stützbasis nach einem der vorangehenden Ansprüche, **dadurch gekennzeichnet, dass** sie eine Zugangstraverse (23) aufweist, die an seinem Ende mit der kleinsten Höhe keilförmig ausgebildet ist.

15. Stützbasis nach einem der Ansprüche 7 bis 10, **gekennzeichnet durch** zwei Längsträgerkästen (49), die seitlich am vorderen Block (47) angrenzen und die miteinander **durch** eine Mehrzahl von Versteifungsquerträgern (50) verbunden sind.

16. Stützbasis nach einem der vorangehenden Ansprüche, **dadurch gekennzeichnet, dass** ihre Oberfläche (17, 51) wenigstens eine Reihe von Durchbrüchen (21, 54) aufweist.

17. Stützbasis nach einem der vorangehenden Ansprüche 1 bis 10, **gekennzeichnet durch** zwei Fahrbahnen (55, 56), die jeweils mit einem Bodenbelag (57) und (58) beschichtet sind und die jeweils auf einem schräg gestellten Träger in Form einer Rampe (59) und (60) befestigt sind, wobei die Fahrbahnen jeweils an ihrem freien Ende in einer nasenförmigen Angriffsfläche (61) und (62) enden.

18. Stützbasis nach einem der vorangehenden Ansprüche 1 bis 10 und 17, **dadurch gekennzeichnet, dass** das Ende vor jeweils einer Fahrbahn durch eine Stützzone (63) und (64) zur Aufnahme einer portablen Gondel und zur Blockierung abgeschlossen ist.

19. Stützbasis nach einem der vorangehenden Ansprüche 1 bis 10 und 17 und 18, **gekennzeichnet durch** eine Kippvorrichtung zum Rangieren (65), die als zwei schwenkbare durch ein Gleichlaufrohr (68) verbundene Arme (66) und (67) ausgebildet ist, wobei die Arme gebogen und schwenkbar auf den äußeren Kanten der Fahrbahn (55) und (56) befestigt sind und **durch** Hebevorrichtungen zum Hochheben und Senken (71) und (72) angetrieben sind, die jeweils zwischen einer Sohle und dem entsprechenden Rangierarm befestigt sind.

20. Stützbasis nach einem der vorangehenden Ansprüche, **gekennzeichnet durch** ein Öffnungswiderlager (33), gegen das die Eisenbahn-Tragstruktur (6) am Ende der Bewegung anstößt.

21. Stützbasis nach einem der vorangehenden Ansprüche, **gekennzeichnet durch** wenigstens ein Bezugselement (34).

22. Stützbasis nach vorangehendem Anspruch, **dadurch gekennzeichnet, dass** das Bezugselement (34) verschiebbar oder positionierbar ist.

23. Stützbasis nach einem der vorangehenden Ansprüche, **dadurch gekennzeichnet, dass** die Rampe(n) mit den Fahrstrukturen durch Neigung anhebbar ist (sind).

## Claims

1. Base for pivotably supporting a pivoting carrying railway structure (6) for a wagon which is intended for the combined rail/road transport of road freight, **characterised in that** it comprises means (25) for supporting and accompanying the pivoting movement of the carrying railway structure (6) and at least one ramp which constitutes a travel track for a road vehicle or road freight.

2. Base according to claim 1, **characterised in that** it can be removed or displaced from the initial position for use thereof.

3. Base according to the preceding claim, **characterised in that** it is positioned at an appropriate location of the platform surface-area (4, 5).

4. Base according to any one of the preceding claims, **characterised in that** the means (25) for supporting and accompanying the pivoting of the carrying railway structure (6) comprise at least one carrying roller (26) which is flush with the surface of the base (12) in order to receive the carrying railway structure.

5. Base according to the preceding claim, **characterised in that** at least one carrying roller (26) is motorised in order to be able to take up and continue pivoting the carrying railway structure (6).

6. Base according to either claim 4 or claim 5, **characterised in that** at least one carrying roller (26) is formed by a rotating cylinder (31) which is slightly frustoconical and whose lateral surface is covered by a metal travel strip (32).

7. Base according to any one of the preceding claims, **characterised in that** the means (25) for supporting and accompanying the pivoting of the carrying railway structure (6) are arranged in a front end assembly (24, 47) which is located at the rail side.

8. Base according to any one of the preceding claims, **characterised in that** the means (25) for supporting and accompanying the pivoting of the carrying railway structure (6) are arranged in an accessible casing (24) or (73).

9. Base according to any one of the preceding claims, **characterised in that** it also serves as a ramp for access to the carrying railway structure (6).

10. Base according to claim 7 and 9, **characterised in that** the front end assembly (24, 47) of the base (12) for pivotable support can be separated from the portion (16, 48) which serves as an access ramp.

11. Base according to any one of the preceding claims, **characterised in that** the at least one ramp can be lifted between a lowered position and a raised position.

12. Base according to claim 9, **characterised in that** it has an elongate body (16) which is generally in the form of a dihedron having a small opening angle in order to form an inclined ramp having a constant or discontinuous progressive gradient.

13. Base according to any one of the preceding claims, **characterised in that** the upper face (17) thereof comprises a plurality of substantially rectangular cross-pieces (18) which are mechanically welded transversely to a light frame (19) having mechanical return pillars (20).

14. Base according to any one of the preceding claims, **characterised in that** it comprises a wedge-like tapering access member (23) in the region of the lowest end thereof.

15. Base according to any one of claims 7 to 10, **characterised in that** it comprises two lateral casing-like elongate members (49) which terminate at the front end assembly (47) and which are connected to each other by means of a plurality of reinforcement cross-pieces (50).

16. Base according to any one of the preceding claims, **characterised in that** the upper wall (17, 51) thereof has at least a series of perforations (21, 54).

17. Base according to any one of the preceding claims 1 to 10, **characterised in that** it is composed of two travel tracks (55) and (56) which are each covered by a flooring member (57) and (58) which are each fixed to a support (59) and (60) inclined in the manner of a ramp, which tracks each terminate towards the free end thereof in a tapering approach member (61) and (62).

18. Base according to any one of the preceding claims 1 to 10 and 17, **characterised in that** the front end of each of the travel tracks terminates in a support zone (63) and (64) for receiving a carrying and immobilisation container.

19. Base according to any one of the preceding claims 1 to 10 and 17 and 18, **characterised in that** it comprises a tilting handling device (65) which is formed by two pivoting arms (66) and (67) which are coupled by means of a synchronism tube (68), these arms being bent and mounted so as to pivot on the outer edges of the travel tracks (55) and (56) and being actuated by means of lifting and lowering jacks (71) and (72) which are each mounted between a plate and the corresponding handling arm.

20. Base according to any one of the preceding claims, **characterised in that** it comprises an opening stop (33) against which the carrying railway structure (6) abuts at the end of travel.

21. Base according to any one of the preceding claims, **characterised in that** it comprises at least one locating means (34).

22. Base according to the preceding claim, **characterised in that** the locating means (34) can be displaced or positioned.

23. Base according to any one of the preceding claims, **characterised in that** the ramps(s) with the travel structures can be raised by means of inclination.
